(19)

Europäisches
Patentamt
European
Patent Office
Office européen
des brevets

(11) **EP 2 574 527 A2**

(12) **EUROPEAN PATENT APPLICATION**

(43) Date of publication:
**03.04.2013 Bulletin 2013/14**

(51) Int Cl.:
**B62D 57/032** [(2006.01)]

(21) Application number: **12186608.1**

(22) Date of filing: **28.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2011 KR 20110097909**

(71) Applicant: **Samsung Electronics Co., Ltd Gyeonggi-do 443-742 (KR)**

(72) Inventors:
• **Lim, Bok Man**
  **Seoul (KR)**
• **Roh, Kyung Shik**
  **Gyeonggi-do (KR)**
• **Kim, Joo Hyung**
  **Gyeonggi-do (KR)**

(74) Representative: **Taor, Simon Edward William et al Venner Shipley LLP**
**200 Aldersgate**
**London EC1A 4HD (GB)**

(54) **Robot and control method thereof**

(57) A robot and method of controlling the robot, the method including setting a target walking motion of the robot using an X-axis displacement, a y-axis displacement, and a z-axis rotation of a robot base, detecting and processing data of a position, a speed and a gradient of the robot base, a z-axis external force exerted on the foot, and a position, an angle, and a speed of each rotation joint using sensors, setting a support state and a coordination system of the robot, processing a state of the robot, performing an adaptive control by generating a target walking trajectory of the robot according to the target walking motion when a supporting leg of the robot is changed, setting a state machine representing a walking trajectory of the robot, and controlling a walking and a balancing of the robot by tracing the state machine that is set.

FIG.11

**EP 2 574 527 A2**

**Description**

Example embodiments of the following disclosure relate to a walking robot that walks according to a dynamic walking based on dynamics, and a control method thereof, and more particularly, to a walking robot, and control method thereof, that is capable of performing natural bipedal walking, similar to a human using low-position control gain.

In general, a humanoid robot represents a robot configured to perform a bipedal walking motion, using a joint system that is similar to a joint system of a human. Such a bipedal humanoid robot needs to drive an actuator, such as an electronic actuator and a hydraulic actuator, positioned at each joint for stable bipedal walking.

One approach to drive an actuator includes a Zero Moment Point (ZMP) control process. The ZMP control process represents a position control process wherein a control is performed by tracing a command position of each joint. According to a ZMP control process, a robot performs an unnatural walk, such as, keeping the position of a pelvis constant when the knees are bent. In addition, in order to perform a control based on a predetermined position, a high-position control gain is used. The using of high-position control gain leads to a reverse control against a dynamic characteristic of a robot, and is undesirable in energy efficiency.

In particular, the ZMP control process provides a joint, which lacks back-drivability, and thus, a robot according to the ZMP control process easily may fall down in an uneven terrain having a bumpy profile.

Accordingly, there is a need to provide a robot with improved bipedal walking performance.

Therefore, it is an aspect of the present disclosure to provide a robot, capable of performing natural walking motions, which are similar to the walking motion of a human, enhancing energy efficiency by using a low-position control gain conforming to a dynamic characteristic, and ensuring stable walking on an uneven terrain, and a control method thereof.

Additional aspects of the disclosure will be set forth in part in the description which follows and, in part, will be obvious from the description, or may be learned by practice of the disclosure.

In accordance with one aspect of the present invention, there is provided a method of controlling a robot is as follows. A target walking motion of the robot is set by use of a combination of an X-axis displacement, a y-axis displacement, and a z-axis rotation of a robot base. By use of a sensor installed a torso, a foot, and rotation joints of the robot, data of a position, a speed and a gradient of the robot base, a z-axis external force exerted on the foot, and a position, an angle, and a speed of each rotation joint are detected and processed. A support state and a coordination system of the robot are set based on the processed data. A state of the robot is processed based on the processed data. If a supporting leg of the robot is changed, an adaptive control is performed by generating a target walking trajectory of the robot according to the target walking motion. A state machine representing a walking trajectory of the robot is set. A walking and a balancing of the robot are controlled by tracing the state machine that is set.

In some embodiments, the detecting and processing of the data, an inertial measurement unit (IMU) sensor installed on the torso of the robot detects the position, the speed, and the gradient of the robot base, a force/torque (F/T) sensor installed on the foot of the robot detects the z-axis external force exerted on the foot, and an encoder sensor installed on each rotation joint of the robot detects the position, the angle, and the speed of the each rotation joint.

In some embodiments, in the detecting and processing of the data, data detected by the IMU sensor and the F/T sensor is subject to a smoothing filter or a Low Pass Filter, and data detected by the encoder sensor is subject to a Low Pass Filter.

In some embodiments, in the setting of the support state and the coordination system of the robot, if the z-axis external force exerted on the foot of the robot exceeds a predetermined threshold value, the foot is determined as a supporting foot of the robot.

In some embodiments, in the setting of the support state and the coordination system of the robot, the coordination system is set by regarding a position of the supporting foot of the robot as a zero point.

In some embodiments, in the setting of the support state and the coordination system of the robot, the support state of the robot is divided into a left side supporting state, a right side supporting state, and a both side supporting state.

In some embodiments, in the processing of the state of the robot, the state of the robot includes the position, the speed and the gradient of the robot base, and the position, the angle, and the speed of each rotation joint.

In some embodiments, in the processing of the state of the robot, the position and the speed of the robot base are compensated and calculated according to equation 1 by use of the coordination system, wherein equation 1 is as follows:

【Equation 1】

$$pB_x' = pB_x - l_{leg} \times \sin(B_{roll\_FK} - B_{roll\_IMU})$$

$$pB_y' = pB_y + l_{leg} \times \sin(B_{pitch\_FK} - B_{pitch\_IMU})$$

herein pBx' and pBy' respectively represent a x axis position of the robot base and a y axis position of the robot base that are compensated, pBx and pBy respectively represent a x axis position of the robot base and a y axis position of the robot base that are calculated by use of the coordination system, lleg represents a length of a leg of the robot, Broll_FK and Bpitch_FK respectively represent a roll gradient of the robot and a pitch gradient of the robot that are calculated through forward kinematics by use of the coordination system, and Broll_IMU, Bpitch_IMU respectively represent a roll gradient of the robot and a pitch gradient of the robot that are detected by the sensor installed on the torso of the robot.

In some embodiments, in the processing of the state of the robot, the position, the angle, and the speed of each rotation joint are compensated and calculated through forward kinematics and dynamics by use of the coordination system based on the processed data.

In some embodiments, in the performing of adaptive control, the target walking trajectory is generated by use of the position, the speed, and the gradient of the robot base, and the position, the angle, and the speed of each rotation joint.

In some embodiments, in the performing of adaptive control, a stride of the robot is determined according to equation 2 by use of a virtual inverted pendulum model, and a position stepped by the foot of the robot is determined by mapping the stride to each rotation joint, wherein equation 2 is as follows:

【Equation 2】

$$l_{step} = V_B \sqrt{h_0 / g + V_B^2 / (4g^2)}$$

$$p_{sweep} = \arcsin(l_{step} / l_{leg})$$

$$\lambda = x_{des} / x_{des,max}$$

$$p_{torso} = \lambda^2 c_{torso,max}$$

$$p_{sweep,max} = \sqrt{\lambda} c_{sweep,max} + c_{sweep,min}$$

$$p_{knee} = \lambda c_{knee,max} + (1-\lambda) c_{knee,min}$$

$$p_{roll} = \lambda c_{roll,max} + (1-\lambda) c_{roll,min}$$

$$p_{toeoff} = \lambda c_{toeoff,max} + (1-\lambda) c_{toeoff,min}$$

herein, lstep represents the stride, VB is the speed of the robot base, ho is an initial height of the robot base, g is acceleration gravity, psweep is a control variable of controlling a motion of each rotation joint, lleg is a length of a leg of the robot, xdes is the x-axis displacement of the robot base, xdes,max is a maximum of the x-axis displacement of the robot base, ptorso is a control variable of controlling a rotation angle of a virtual torso, ctorso,max is a predetermined maximum of the rotation angle of the virtual torso, psweep,max is a maximum of a control variable of controlling a motion of each rotation joint, csweep,max is a predetermined maximum of the motion of each rotation joint, csweep,min is a predetermined minimum of the motion of each rotation joint, pknee is a control variable of controlling a rotation angle of a knee joint of the robot, cknee,max is a predetermined maximum of the rotation angle of the knee joint of the robot, cknee,min is a predetermined minimum of the rotation angle of the knee joint of the robot, proll is a control variable of controlling a roll rotation angle of each rotation joint, croll,max is a predetermined maximum of the roll rotation angle of each rotation joint, croll,min is a predetermined minimum of the roll rotation angle of each rotation joint, ptoeoff is a control variable of controlling the position stepped by the foot of the robot, ctoeoff,max is a predetermined maximum of the position stepped by the foot, and ctoeoff,min is a predetermined minimum of the position stepped by the foot.

In some embodiments, in the performing of adaptive control, according to equation 3, a posture of the torso is controlled by correcting the target walking trajectory by use of a difference between an actual gradient of the robot base detected by the sensor installed on the torso of the robot and a target gradient of the robot base, wherein equation 3 is as follows:

【Equation 3】

$$q_{hip\_roll,d}' = q_{hip\_roll,d} - (B_{roll,d} - B_{roll\_IMU})$$

$$q_{hip\_pitch,d}' = q_{hip\_pitch,d} - (B_{pitch,d} - B_{pitch\_IMU})$$

,

herein qhip_roll,d' and qhip_pitch,d' respectively represent a roll rotation angle of a hip joint and a pitch rotation angle of the hip joint that are corrected, qhip_roll,d and qhip_pitch,d respectively represent a roll rotation angle of the hip joint and a pitch rotation angle of the hip joint that are on the target walk trajectory, Broll,d and Bpitch,d respectively represent a target roll gradient of the robot base and a target pitch gradient of the robot base, and Broll_IMU and Bpitch_IMU respectively represent a roll gradient of the robot base and a pitch gradient of the robot base that are detected by the sensor.

In some embodiments, in the performing of adaptive control, a posture of a swinging leg of the robot is controlled to keep a roll rotation angle of an ankle joint of the robot in parallel to a ground according to equation 4 as follows:

【Equation 4】

$$q_{sw\_ankle\_roll,d}' = q_{sw\_ankle\_roll,d} - q_{sw\_ankle\_roll}$$

.

herein qsw_ankle_roll,d' is a corrected roll rotation angle of an ankle joint of the swinging leg of the robot, qsw_ankle_roll,d is a roll rotation angle of an ankle joint of the swinging leg of the robot on the target walking trajectory, qsw_ankle_roll is a roll rotation angle of an ankle joint of the swinging leg of the robot that is calculated through the processed data and forward kinematics.

In some embodiments, the supporting leg is changed, based on a load measured by the F/T sensor.

In accordance with anther aspect of the present invention, there is provided a method of controlling a robot is as follows. A target walking motion of the robot is set by use of a combination of an X-axis displacement, a y-axis displacement, and a z-axis rotation of a robot base. By use of a sensor installed a torso, a foot and rotation joints of the robot, data of a position, a speed, and a gradient of the robot base, a z-axis external force exerted on the foot, and a position, an angle, and a speed of each rotation joint are detected and processed. A support state and a coordination system of the robot are set based on the processed data. A state of the robot is processed based on the processed data. If a supporting leg of the robot is changed, an adaptive control is performed by generating a target walking trajectory of the robot according to the target walking motion. A state machine that represents a walking trajectory of the robot is set. Driving torques of the rotation joints, which are used to trace the state machine, are distributed to actuators of the rotation joints, respectively.

In some embodiments, in the distributing of the driving torques of the rotation joints to the actuators of the rotation joints, a driving torque of each rotation joint is calculated according to equation 5 as follows:

**【Equation 5】**

$$\tau_d = w_1 \tau_{state\_machine} + w_2 \tau_{g\_comp} + w_3 \tau_{model} + w_4 \tau_{reflex}$$ ,

herein τd is a driving torque of each rotation joint, w1, w2, w3 and w4 are weighting factors, τstate_machine is a torque of each rotation joint used to trace the state machine, τg_comp is a gravity compensation torque, τmodel is a balancing torque, and τreflex is a reflex torque.

In some embodiments, in the distributing of the driving torques of the rotation joints to the actuators of the rotation joints, the torque of each rotation joint used to trace the state machine is calculated according to equation 6 as follows:

**【Equation 6】**

$$\tau_{state\_machine} = k_p (q_d - q) - k_d \dot{q}$$ ,

herein τstate_machine is the torque of each rotation joint used to trace the state machine, kp and kd are parameters, qd is a target angle of each rotation joint, q is an angle of each rotation joint, and $\dot{q}$ is a speed of each rotation joint.

In some embodiments, in the distributing of the driving torques of the rotation joints to the actuators of the rotation joints, the gravity compensation torque is calculated according to equation 7 as follows:

**【Equation 7】**

$$\tau_{g\_comp} = G(R_B, q_d)$$ ,

herein τg_comp is the gravity compensation torque, RB is a three by three matrix representing an azimuth of the robot base, qd is a target angle of each rotation joint, and G() is a gravity compensation function.

In some embodiments, in the distributing of the driving torques of the rotation joints to the actuators of the rotation joints, the balancing torque is calculated according to equation 8 as follows:

**【Equation 8】**

$$F_{virtual} = k_p m (p_{B,des} - P_B) - k_d m V_B$$

$$\tau_{model} = J^T F_{virtual}$$

herein Fvirtual is a virtual force exerted on the robot, kp and kd are parameters, PB,des is a target position of the robot base, PB is a position of the robot base, m is a mass of the robot, VB is a speed of the robot base, τmodel is the balancing torque, JT is a Jacobian, which describes from an ankle of a supporting leg of the robot to the robot base.

In some embodiments, in the distributing of the driving torques of the rotation joints to the actuators of the rotation joints, the reflex torque is calculated according to equation 9 as follows:

【Equation 9】

$$\tau_{reflex} = \begin{cases} \eta(\dfrac{1}{\rho} - \dfrac{1}{\rho_0})\dfrac{1}{\rho^2}, if \rho \le \rho_0 \\ 0, if \rho > \rho_0 \end{cases}$$

,

herein τreflex is the reflex torque, $\eta$ is a weighting factor, $\rho$ is a distance between both legs of the robot, and $\rho_0$ is a limit of the distance between the both legs.

In accordance with another aspect of the present invention, there is provided a robot having a plurality of rotation joints for a walking and a robot base includes an input unit, a control unit and a driving unit. The input unit allows a target walking motion of the robot to be input thereto. The control unit is configured to perform an adaptive control by generating a target walking trajectory of the robot according to the target walking motion, to set a state machine representing a walking trajectory of the robot, and to distribute driving torques of the rotation joints, which are used to trace the state machine, to driving units of the rotation joints, respectively. The driving unit is configured to drive the respective rotation joints of the robot according to the driving torque distributed by the control unit.

In some embodiments, the control unit determines a stride of the robot according to equation 2 by use of a virtual inverted pendulum model, and determines a position stepped by the foot of the robot by mapping the stride to each rotation joint of the robot, wherein equation 2 is as follows:

【Equation 2】

$$l_{step} = V_B \sqrt{h_0 / g + V_B^2 / (4g^2)}$$

$$p_{sweep} = \arcsin(l_{step} / l_{leg})$$

$$\lambda = x_{des} / x_{des,max}$$

$$p_{torso} = \lambda^2 c_{torso,max}$$

$$p_{sweep,max} = \sqrt{\lambda} c_{sweep,max} + c_{sweep,min}$$

$$p_{knee} = \lambda c_{knee,max} + (1 - \lambda) c_{knee,min}$$

$$p_{roll} = \lambda c_{roll,max} + (1 - \lambda) c_{roll,min}$$

$$p_{toeoff} = \lambda c_{toeoff,max} + (1 - \lambda) c_{toeoff,min}$$

herein, lstep represents the stride, VB is the speed of the robot base, ho is an initial height of the robot base, g is acceleration gravity, psweep is a control variable of controlling a motion of each rotation joint, lleg is a length of a leg of the robot, xdes is the x-axis displacement of the robot base, xdes,max is a maximum of the x-axis displacement of the robot base, ptorso is a control variable of controlling a rotation angle of a virtual torso, ctorso,max is a predetermined maximum of the rotation angle of the virtual torso, psweep,max is a maximum of a control variable of controlling a motion of each rotation joint, csweep,max is a predetermined maximum of the motion of each rotation joint, csweep,min is a predetermined minimum of the motion of each rotation joint, pknee is a control variable of controlling a rotation angle of a knee joint of the robot, cknee,max is a predetermined maximum of the rotation angle of the knee joint of the robot, cknee,min is a predetermined minimum of the rotation angle of the knee joint of the robot, proll is a control variable of controlling a roll rotation angle of each rotation joint, croll,max is a predetermined maximum of the roll rotation angle of each rotation joint, croll,min is a predetermined minimum of the roll rotation angle of each rotation joint, ptoeoff is a control variable of controlling the position stepped by the foot of the robot, ctoeoff,max is a predetermined maximum of the position stepped by the foot, and ctoeoff,min is a predetermined minimum of the position stepped by the foot.

In some embodiments, the control unit controls a posture of the torso by correcting the target walking trajectory by use of a difference between an actual gradient of the robot base detected by the sensor installed on the torso of the robot and a target gradient of the robot base according to equation 3 as follows:

【Equation 3】

$$q_{hip\_roll,d}{'} = q_{hip\_roll,d} - \left( B_{roll,d} - B_{roll\_IMU} \right)$$

$$q_{hip\_pitch,d}{'} = q_{hip\_pitch,d} - \left( B_{pitch,d} - B_{pitch\_IMU} \right)$$

,

herein qhip_roll,d' and qhip_pitch,d' respectively represent a roll rotation angle of a hip joint and a pitch rotation angle of the hip joint that are corrected, qhip_roll,d and qhip_pitch,d respectively represent a roll rotation angle of the hip joint and a pitch rotation angle of the hip joint that are on the target walking trajectory, Broll,d and Bpitch,d respectively represent a target roll gradient of the robot base and a target pitch gradient of the robot base, and Broll_IMU and Bpitch_IMU respectively represent a roll gradient of the robot base and a pitch gradient of the robot base that are detected by the sensor.

In some embodiments, the control unit controls a posture of a swinging leg of the robot by keeping a roll rotation angle of an ankle joint of the robot in parallel to a ground according to equation 4 as follows:

【Equation 4】

$$q_{sw\_ankle\_roll,d}{'} = q_{sw\_ankle\_roll,d} - q_{sw\_ankle\_roll}$$

,

herein qsw_ankle_roll,d' is a corrected roll rotation angle of an ankle joint of the swinging leg of the robot, qsw_ankle_roll,d is a roll rotation angle of an ankle joint of the swinging leg of the robot on the target walking trajectory, qsw_ankle_roll is a roll rotation angle of an ankle joint of the swinging leg of the robot that is calculated through the processed data and forward kinematics.

In some embodiments, the control unit calculates a driving torque of each rotation joint according to equation 5 as follows:

【Equation 5】

$$\tau_d = w_1 \tau_{state\_machine} + w_2 \tau_{g\_comp} + w_3 \tau_{model} + w_4 \tau_{reflex}$$ ,

herein τd is a driving torque of each rotation joint, w1, w2, w3 and w4 are weighting factors, τstate_machine is a torque of each rotation joint, which is used to trace the state machine, τg_comp is a gravity compensation torque, τmodel is a balancing torque, and τreflex is a reflex torque.

The control unit calculates the torque of each rotation joint, which is used to trace the state machine according to equation 6 as follows:

【Equation 6】

$$\tau_{state\_machine} = k_p(q_d - q) - k_d \dot{q}$$ ,

herein τstate_machine is the torque of each rotation joint, which is used to trace the state machine, kp and kd are parameters, qd is a target angle of each rotation joint, q is an angle of each rotation joint, and $\dot{q}$ is a speed of each rotation joint.

In some embodiments, the control unit calculates the gravity compensation torque according to equation 7 as follows:

【Equation 7】

$$\tau_{g\_comp} = G(R_B, q_d)$$ ,

herein τg_comp is the gravity compensation torque, RB is a three by three matrix representing an azimuth of the robot base, qd is a target angle of each rotation joint, and G() is a gravity compensation function.

In some embodiments, the control unit calculates the balancing torque according to equation 8 as follows:

【Equation 8】

$$F_{virtual} = k_p m(p_{B,des} - P_B) - k_d m V_B$$

$$\tau_{model} = J^T F_{virtual}$$ ,

herein Fvirtual is a virtual force exerted on the robot, kp and kd are parameters, PB,des is a target position of the robot base, PB is a position of the robot base, m is a mass of the robot, VB is a speed of the robot base, τmodel is the balancing torque, and JT is a Jacobian, which describes from an ankle of a supporting leg of the robot to the robot base.

In some embodiments, the control unit calculates the reflex torque according to equation 9 as follows:

【Equation 9】

$$\tau_{reflex} = \begin{cases} \eta(\frac{1}{\rho} - \frac{1}{\rho_0})\frac{1}{\rho^2}, if \rho \leq \rho_0 \\ 0, if \rho > \rho_0 \end{cases},$$

herein $\tau_{reflex}$ is the reflex torque, $\eta$ is a weighting factor, $\rho$ is a distance between both legs of the robot, and $\rho_0$ is a limit of the distance between the both legs.

According to a first aspect of the invention, there is provided a method of controlling a robot as set out in claim 1. Preferred features of this aspect are set out in claims 2 to 16.

According to a second aspect of the invention, there is provided a robot as set out in claim 17. Preferred features of this aspect are set out in claims 18 to 25.

As described above, in order for a natural walk similar to a human is to be enabled, a control of the robot is performed using a low-position control gain conforming to a dynamic characteristic so that the energy efficiency is enhanced, and a stable walk on an uneven terrain is ensured.

These and/or other aspects of the disclosure will become apparent and more readily appreciated from the following description of the embodiments, taken in conjunction with the accompanying drawings of which:

FIG. 1 is a view illustrating the external appearance of a robot, according to an example embodiment of the present invention;

FIG. 2 is a schematic view illustrating the configuration of coordinates of main joints of the robot, according to an example embodiment of the present invention;

FIG. 3 is a side view schematically illustrating the coordinates of the main joints of the robot, according to an example embodiment of the present invention;

FIG. 4 is a front view schematically illustrating the coordinates of the main joints of the robot, according to an example embodiment of the present invention;

FIG. 5 is a planar view schematically illustrating the coordinates of the main joints coordination of the robot, according to an example embodiment of the present invention;

FIG. 6 is a schematic view illustrating a turning walk of the robot, according to an example embodiment of the present invention;

FIG. 7 shows a state machine, schematically illustrating a side view of the robot, according to an example embodiment of the present invention;

FIG. 8 shows a state machine, schematically illustrating a front view of the robot, according to an example embodiment of the present invention;

FIG. 9 is a side view schematically illustrating a bipedal walking motion of the robot, according to an example embodiment of the present invention;

FIG. 10 is a block diagram illustrating the configuration of the robot, according to an example embodiment of the present invention; and

FIG. 11 is a flowchart showing a method of controlling a robot, according to an example embodiment of the present invention.

Reference will now be made in detail to the embodiments of the present invention, examples of which are illustrated in the accompanying drawings, wherein like reference numerals refer to like elements throughout.

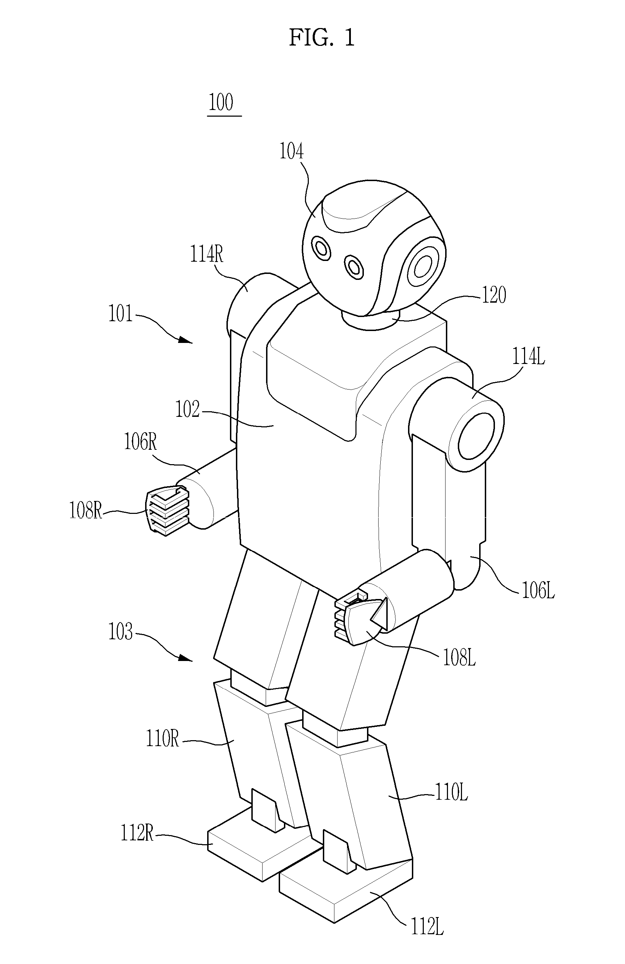

FIG. 1 is a view illustrating the external appearance of a robot, according to an example embodiment of the present invention.

Referring to FIG. 1, a robot 100 is a bipedal walking robot, which is capable of walking upright using both legs 110 including a left leg 110L and a right leg 110R, similar to a human. The robot 100 includes an upper body 101 having a torso 102, a head 104 and both arms 106 including a left arm 106L and a right arm 106R, and a lower body 103 having the both legs 110.

The upper body 101 of the robot 100 includes the torso 102, the head 104 connected at an upper side of the torso 102 through a neck 120, the both arms 106L and 106R, and hands 108L and 108R connected to end portions of the both arms 106L and 106R.

The lower body 103 of the robot 100 includes the both legs 110L and 110R connected to two lower sides of the torso 102 of the upper body 101 and feet 112L and 112R connected to end portions of the both legs 110L and 110R, respectively.

Reference symbols "R" and "L" represent the right side and the left side of the robot 100, respectively.

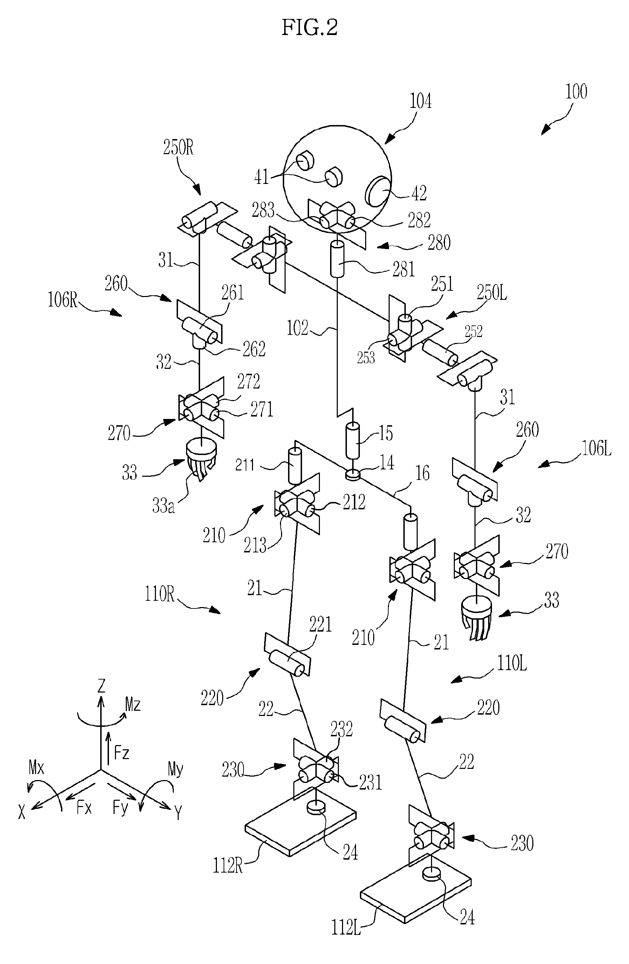

FIG. 2 is a schematic view illustrating coordinates of main joints of the robot, according to an example embodiment of the present invention.

Referring to FIG. 2, the torso 102 of the robot 100 has two degrees of freedom including a yaw rotation joint 15 (Z axis rotation) and a pitch rotation joint 16 (Y axis rotation), thereby enabling the upper body 101 to rotate.

In addition, a camera 41 configured to capture an image of a surrounding environment and a microphone 42 configured to input a voice of a user are installed on the head 104 of the robot 100.

The head 104 is connected to the torso 102 of the upper body 101 through a neck joint part 280. The neck joint part 280 has three degrees of freedom including a yaw rotation joint 281, a pitch rotation joint 282, and a roll rotation joint 283 (X axis rotation).

The arms 106L and 106R of the robot 100 include upper arm links 31, lower arm links 32, and hands 33.

The upper arm links 31 are connected to the upper body 101 through shoulder joint parts 250L and 250R. The upper arm links 31 are connected to the lower arm links 32 through elbow joint parts 260. The lower arm links 32 are connected to the hands through wrist joint parts 270.

The shoulder joint parts 250L and 250R are installed on both sides of the torso 102 of the upper body 101 to connect the arms 106L and 106R to the torso 102 of the upper body 101. The should joint parts 250L and 250R have three degrees of freedom, including a pitch rotation joint 251, a yaw rotation joint 252, and a roll rotation joint 253.

The elbow joint part 260 has two degrees of freedom including a pitch rotation joint 261 and a yaw rotation joint 262.

The wrist joint part 270 has two degrees of freedom including a pitch rotation joint 271 and a roll rotation joint 272.

Five fingers 33a are installed on the hand 33. A plurality of joints (not shown) driven by a motor may be installed on each finger 33a. The finger 33a performs various types of operations, such as, grasping an object or pointing at an object in combination with a motion of the arm 106.

The legs 110L and 110R of the robot 100 have upper leg links 21, lower leg links 22, and feet 112L and 112R.

The upper leg link 21 corresponds to a thigh of a human, and is connected to the torso 102 of the upper body 101 through a hip joint part 210. The upper leg links 21 are connected to the lower leg links 22 through knee joint parts 220. The lower leg links 22 are connected to the feet 112L and 112R through ankle joint parts 230.

The hip joint part 210 has three degrees of freedom including a yaw rotation joint 211, a pitch rotation joint 212, and a roll rotation joint 213.

The knee joint part 220 has one degree of freedom including a pitch rotation joint 221. The ankle joint part 230 has two degrees of freedom including a pitch rotation joint 231 and a roll rotation joint 232.

Two rotation joints are provided with respect to the two legs 110L and 110R since six rotation joints are provided with respect to one hip joint part 210, one knee joint parts 220, and one ankle joint parts 230.

Meanwhile, a robot base (not shown) is installed on the torso 102 of the robot 100. The robot base may be installed on the hip joint part 210 other than the torso 102.

An inertial measurement unit (IMU) sensor 14 is installed on the torso 102 of the robot 100. The IMU sensor 14 detects the position, the speed, and the gradient of the robot base. The IMU sensor 14 may be installed on the head 104 or on the hip joint part 210 other than on the torso 102.

A Force and Torque Sensor (F/T sensor) 24 is installed between the feet 112L and 112R and the ankle joint parts 230 on the legs 110L and 110R. The F/T sensor 24 detects an external force in a z axis direction exerted on the feet 112L and 112R of the robot 100. Although not shown, an actuator such as a motor configured to drive each rotation joint is installed on the robot 100. A control unit configured to control the overall operation of the robot 100 controls the motor, thereby implementing various operations of the robot 100.

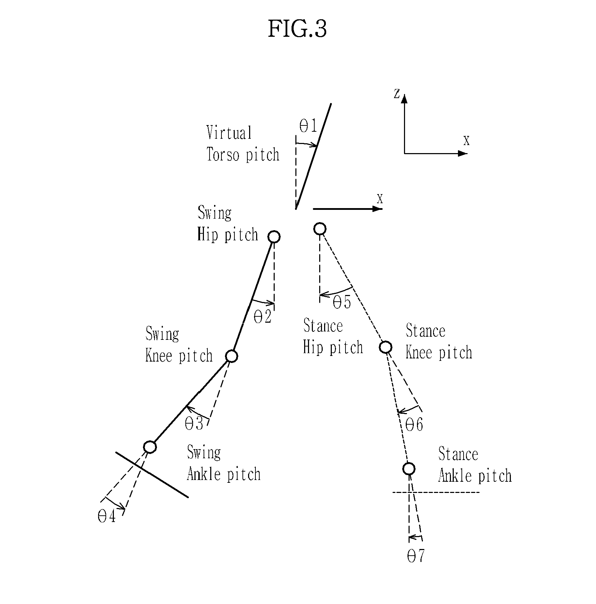

FIG. 3 is a side view schematically illustrating the coordinates of the main joints of the robot, according to an example embodiment of the present invention.

Referring to FIG. 3, with respect to a walking direction (x-axis, i.e., forward direction) of a robot, $\theta1$ represents a pitch rotation angle (virtual torso pitch) of a rotation joint of a virtual torso, $\theta2$ represents a pitch rotation angle (swing hip pitch) of a rotation joint of a hip joint part of a swinging leg, $\theta3$ represents a pitch rotation angle (swing knee pitch) of a rotation joint of a knee joint part of a swinging leg, $\theta4$ represents a pitch rotation angle (swing ankle pitch) of a rotation joint of an ankle joint part of a swinging leg, $\theta5$ represents a pitch rotation angle (stance hip pitch) of a rotation joint of a hip joint part of a supporting leg, $\theta6$ represents a pitch rotation angle (stance knee pitch) of a rotation joint of a knee joint part of a supporting leg, and $\theta7$ represents a pitch rotation angle (stance ankle pitch) of a rotation joint of an ankle joint part of a supporting leg.

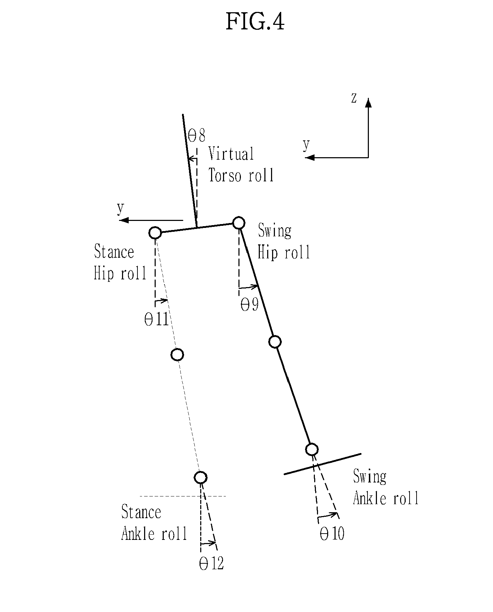

FIG. 4 is a front view schematically illustrating the coordinates of the main joints of the robot, according to an example embodiment of the present invention.

Referring to FIGS. 2 and 4, with respect to a walking direction (x-axis, i.e., forward direction) of a robot, $\theta 8$ represents a roll rotation angle (virtual torso roll) of a rotation joint of a virtual torso, $\theta 9$ represents a roll rotation angle (swing hip roll) of a rotation joint of a hip joint part of a swinging leg, $\theta 10$ represents a roll rotation angle (swing ankle roll) of a rotation joint of a ankle joint part of a swinging leg, $\theta 11$ represents a roll rotation angle (stance hip roll) of a rotation joint of a hip joint part of a supporting leg, and $\theta 12$ represents a roll rotation angle (stance ankle roll) of a rotation joint of an ankle joint part of a supporting leg.

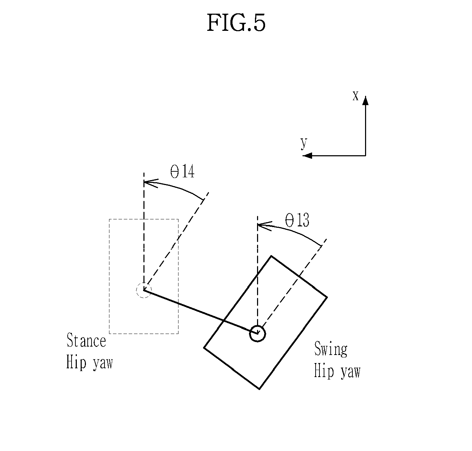

FIG. 5 is a planar view schematically illustrating the coordinates of the main joints of the robot, according to an example embodiment of the present invention.

Referring to FIGS. 2 and 5, with respect to a walking direction (x-axis, i.e., forward direction) of a robot, $\theta 13$ represents a yaw angle (swing hip yaw) of a rotation joint of a hip joint part of a swinging leg and $\theta 14$ represents a yaw angle (stance hip yaw) of a rotation joint of a hip joint part of a supporting leg.

Referring to FIGS. 3 to 5, the left leg is a supporting leg and the right leg is a swinging leg. However, the supporting leg and the swinging leg may be alternatively changed. In FIGS. 3 to 5, only the main joints of the lower body 103 of the robot 100 are shown. However, the operation of main joints of the upper body 103 may be implemented in the same manner as the main joints of the lower body 103.

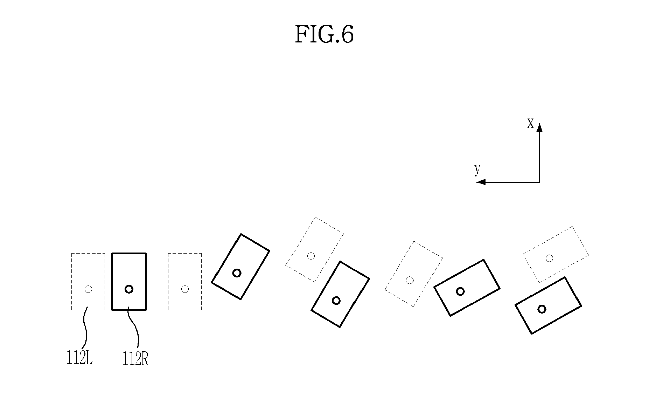

FIG. 6 is a view illustrating footsteps of a walking robot performing a turn, according to an example embodiment of the present invention.

Referring to FIGS. 2 and 6, an area shown as a dotted line represents the left foot 112L and an area shown as a solid line represents the right foot 112R. The robot changes the direction of walking through a yaw rotation of the hip joint part 210. That is, the robot performs a turning motion through a yaw rotation of the both hip joint parts 210. When a turning motion is combined with a linear motion, e.g., forward movement, the robot performs a turn walking as well as a straight walking.

Hereinafter, a process of setting a target walking motion of a robot will be described.

A target walking motion of a robot is achieved by the combination of a linear motion and a rotation motion. In detail, a walk command of a robot is provided in the form of a combination of xdes defining an X-axis displacement of the robot base, ydes defining a Y-axis displacement of the robot base, and $\theta$des defining a Z-axis rotation. For example, if a target rotation angle $\theta$des is zero and a predetermined target displacement xdes is given, the robot walks forward in a straight direction, without turning, as $\theta$des is zero. If a target rotation angle $\theta$des is not zero and a predetermined target displacement xdes is given, a linear motion and a rotation motion are simultaneously performed, allowing the robot to perform a turn walking.

Referring to FIGS. 2 and 6, as the control unit applies a target rotation angle $\theta$des to the yaw rotation joint 211 of the hip joint part 210, the hip joint part 210 rotates in a yaw direction, so the walking direction of the robot 100 is changed from the x-axis direction to the y-axis direction.

Hereinafter, a process of processing sensor data will be described.

The IMU sensor installed on the robot, e.g., IMU sensor 14 of FIG. 2, detects a gradient of the robot base, and the F/T sensor, e.g., F/T sensor 24 of FIG. 2, installed on the robot detects an external force in a z-axis direction exerted on the foot of the robot. In addition, the encoder sensor installed each rotation joint detects the position, the angle and the speed of the rotation joint.

The control unit performs a smoothing filtering or a low pass filtering on the gradient of the robot base detected by the IMU sensor and the external force in a z-axis direction exerted on the foot of the robot detected by the F/T sensor. In addition, the control unit performs a low pass filtering on the position, the angle, and the speed of each rotation joint detected by the encoder sensor.

Hereinafter, a process of setting a support state of the robot, according to an example embodiment of the present invention will be described.

The F/T sensor detects an external force in a z-axis direction exerted on the foot of the robot. That is, the F/T sensor measures the load exerted on the foot of the robot, and the control unit, if the measured load exceeds a predetermined threshold value, determines that the foot measured is a supporting foot.

Meanwhile, the support state of the robot is divided into a plurality of states. For example, when the robot is walking, the support state may be divided into a state that the left leg is supporting the robot and the right leg is swinging, a state that the left leg is swinging and the right leg is supporting the robot, a state that the robot stops walking, and a state that the both legs are supporting the robot.

The control unit determines a supporting foot of the robot, and sets a coordinate system by regarding the position of the supporting foot as a zero point, according to the support state of the robot. If the supporting foot of the robot is changed, the coordinate system is also changed for use. That is, a coordinate system is set with respect to a supporting foot, which is switched, as a zero point.

For example, when the left foot is determined to be the supporting foot of the robot, the coordinate system with respect to the left foot may have the position of the left foot as a zero point, according to the support state of the robot.

As described above, the support state of the robot is divided into a left side supporting state, a right side supporting state, and a both side supporting state. The leg is classified into a supporting leg and a swinging leg.

Hereinafter, a process of processing a state of the robot, according to an example embodiment of the present invention will be described.

The state of the robot is a concept involving the position, the speed, and the gradient of the robot base, and the position, the angle, and the speed of each rotation joint.

Based on the sensor data having been subject to filtering, the position and the speed of the robot base are calculated. In order to reduce numeric error associated with a coordinate system, a coordinate system according to the current support state of the robot is used in calculating the position and the speed of the robot base. The coordinate system according to the support state of the robot is obtained based on an assumption that the supporting leg is fixed to the ground, providing a heel landing motion, which is similar to the heel movement of a human. However, when all of the area of the sole of the foot does not completely make contact with the ground, errors in calculating the position and the speed of the robot base may occur.

Accordingly, the position and the speed of the robot base are compensated according to equation 1.

【Equation 1】

$$pB'_x = pB_x - l_{leg} \times \sin(B_{roll\_FK} - B_{roll\_IMU})$$

$$pB'_y = pB_y + l_{leg} \times \sin(B_{pitch\_FK} - B_{pitch\_IMU})$$

herein pBx' and pBy' respectively represent an x-axis position of the robot base and a y-axis position of the robot base that are compensated, pBx and pBy, respectively, represent an x-axis position of the robot base and a y-axis position of the robot base that are calculated by use of the coordination system, and lleg represents a length of a leg of the robot.

Broll_FK and Bpitch_FK respectively represent a roll gradient of the robot and a pitch gradient of the robot that are calculated through forward kinematics by use of the coordination system, and Broll_IMU and Bpitch_IMU respectively represent a roll gradient of the robot and a pitch gradient of the robot that are detected by the IMU sensor.

Meanwhile, the position, the angle, and the speed of each rotation joint of the robot are calculated through forward kinematics based on the sensor data having been subject to the filtering performed by the control unit.

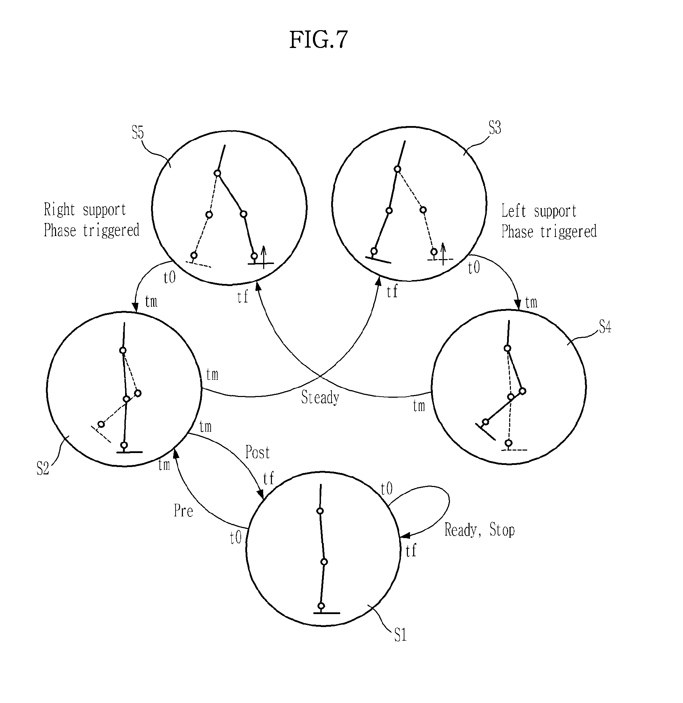

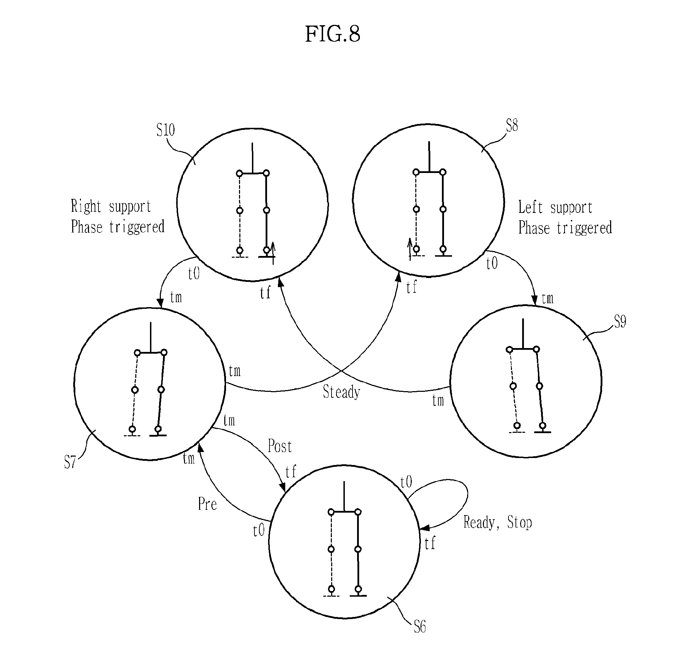

FIG. 7 is a side view schematically illustrating a state machine of the robot, according to an example embodiment of the present invention. FIG. 8 is a front view schematically illustrating a state machine of the robot, according to an example embodiment of the present invention.

Referring to FIGS. 7 and 8, a walking trajectory of the robot is generated based on the state machine of the robot. For example, the walking trajectory of the robot may be divided into following five postures of states.

At t=0, both legs are fixed to the ground (S1; S6). At t=tm, in order for the left leg to swing, the robot lifts the left leg from the ground while supporting the ground only with the right leg (S2; S7; pre-steady state). At t=tf, the left leg, after swinging one stride, comes to support the ground again (S3; S8; left support phase triggered). The time passes in the order of to, tm and tf.

Similarly, the posture (S3; S8) having the left leg swung is assumed to a state corresponding to "t=t0". In order for the right leg to swing, at t=tm, the robot lifts the right leg from the ground while supporting the ground only with the left leg (S4; S9; stead state). At t=tf, the right leg, after swinging one stride, comes to support the ground again (S5; S10; right support phase triggered).

When the robot stops, it is assumed that the posture (S4; S9) having the right leg lifted to swing corresponds to "t=t0". At t=tm, the robot lifts the left leg from the ground while supporting the ground only with the right leg (S2; S7; post-steady state). Thereafter, at t=tf, the robot returns the state having the both legs fixed to the ground (S1; S6; stop state).

As described above, the walking trajectory of the robot is divided into five postures. Each posture may be represented using a via point of each rotation joint of the robot in the coordination system. For example, in FIG. 7, the via point of each rotation joint is represented using the position of each rotation joint and a pitch rotation angle of each rotation joint. For example, in FIG. 8, the via point of each rotation joint is represented using the position of each rotation joint and a roll rotation angle of each rotation joint. Meanwhile, the control unit changes the supporting leg and the swinging leg of the state machine based on the load measured by the F/T sensor. For example, if the load measured at the left leg exceeds a predetermined threshold value, the left leg is controlled to swing and the right leg is controlled to support the ground. On the contrary, if the load measured at the right leg exceeds a predetermined threshold value, the right leg is controlled to swing and the left leg is controlled to support the ground. In this manner, the robot walks while alternating the swinging leg and the swinging leg between the left and right legs.

The via point of each rotation joint may be interpolated using Catmull-Rom Splines, so that an entire motion of each rotation joint is represented.

That is, the state machine is composed of the via point of the rotation joint. The control unit changes the target walking trajectory of the robot by changing the via point. The control unit changes the target walking trajectory of the robot in real time by use of a plurality of control variables of controlling the via point.

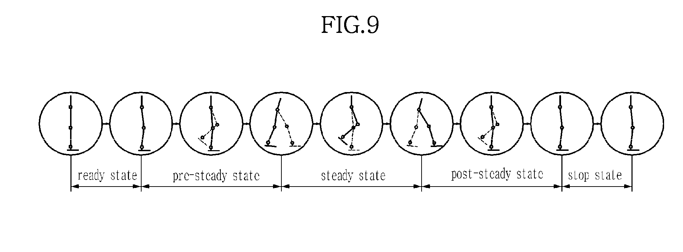

FIG. 9 is a side view schematically illustrating a walking of the robot, according to an example embodiment of the present invention.

Referring to FIG. 9, the robot starts walking from a stop state by swinging the left leg one stride, proceeds walking by swinging the right leg one stride, and stops walking after swing the left leg half stride (ready state →pre-steady state→steady state→post-steady state→stop state).

As described above, the walking trajectory of the robot is divided into a plurality of postures. The control unit interpolates the via point corresponding to the walking trajectory of the robot and controls each rotation joint according to the via point. Hereinafter, an adaptive control process of the robot, according to an example embodiment of the present invention will be described.

In order to prevent the robot from falling down, the foot of the robot needs to step on a proper position. The control unit may calculate the state of the robot when the supporting leg of the robot is changed, that is, calculate the position, the speed, and the gradient of the robot base and the position, the angle, and the speed of each rotation joint, thereby generating the target walking trajectory.

The target walking motion is generated by use of an inverted pendulum model and based on a concept that the robot steps on a position where the initial energy is equal to the final energy and the speed of the robot base is zero. In the adaptive control process, the stride of the robot is determined by equation 2 and the determined stride of the robot is mapped to each rotation joint, so that the position stepped by the foot may be determined.

【Equation 2】

$$l_{step} = V_B \sqrt{h_0 / g + V_B^2 / (4g^2)}$$

$$p_{sweep} = \arcsin(l_{step} / l_{leg})$$

$$\lambda = x_{des} / x_{des,max}$$

$$p_{torso} = \lambda^2 c_{torso,max}$$

$$p_{sweep,max} = \sqrt{\lambda} c_{sweep,max} + c_{sweep,min}$$

$$p_{knee} = \lambda c_{knee,max} + (1-\lambda) c_{knee,min}$$

$$p_{roll} = \lambda c_{roll,max} + (1-\lambda) c_{roll,min}$$

$$p_{toeoff} = \lambda c_{toeoff,max} + (1-\lambda) c_{toeoff,min}$$

herein, $l_{step}$ represents the stride, $V_B$ is the speed of the robot base, $h_0$ is an initial height of the robot base, $g$ is acceleration gravity, $p_{sweep}$ is a control variable of controlling a motion of each rotation joint, and $l_{leg}$ is a length of a leg of the robot. $x_{des}$ is the x-axis displacement of the robot base, $x_{des,max}$ is a maximum of the x-axis displacement of the robot base, $p_{torso}$ is a control variable of controlling a rotation angle of a virtual torso, $c_{torso,max}$ is a predetermined maximum of the rotation angle of the virtual torso, and $p_{sweep,max}$ is a maximum of a control variable of controlling a motion of each rotation joint.

$c_{sweep,max}$ is a predetermined maximum of the motion of each rotation joint, $c_{sweep,min}$ is a predetermined minimum of the motion of each rotation joint, $p_{knee}$ is a control variable of controlling a rotation angle of a knee joint of the robot, cknee,max is a predetermined maximum of the rotation angle of the knee joint of the robot, and cknee,min is a predetermined minimum of the rotation angle of the knee joint of the robot.

proll is a control variable of controlling a roll rotation angle of each rotation joint, croll,max is a predetermined maximum of the roll rotation angle of each rotation joint, croll,min is a predetermined minimum of the roll rotation angle of each rotation joint, ptoeoff is a control variable of controlling the position stepped by the foot of the robot, ctoeoff,max is a predetermined maximum of the position stepped by the foot and ctoeoff,min is a predetermined minimum of the position stepped by the foot.

The adaptive control process of the robot includes a process of controlling the posture of the torso of the robot and a process of controlling the posture of the swinging leg of the robot.

In order to control the posture of the torso of the robot, the target walking trajectory, by use of equation 3, is corrected by a difference between the actual gradient of the robot base detected by the IMU sensor and the target gradient of the robot base.

【Equation 3】

$$q_{hip\_roll,d}' = q_{hip\_roll,d} - (B_{roll,d} - B_{roll\_IMU})$$

$$q_{hip\_pitch,d}' = q_{hip\_pitch,d} - (B_{pitch,d} - B_{pitch\_IMU})$$

herein qhip_roll,d' and qhip_pitch,d' respectively represent a roll rotation angle of a hip joint and a pitch rotation angle of the hip joint that are corrected, qhip_roll,d and qhip_pitch,d, respectively, represent a roll rotation angle of the hip joint and a pitch rotation angle of the hip joint that are on the target walking trajectory, Broll,d and Bpitch,d, respectively, represent a target roll gradient of the robot base and a target pitch gradient of the robot base, and Broll_IMU and Bpitch_IMU, respectively, represent a roll gradient of the robot base and a pitch gradient of the robot base that are detected by the sensor.

In order to control the posture of the swinging leg of the robot, a roll rotation angle of an ankle joint of the robot is kept in parallel to a ground according to equation 4 that is as follows:

【Equation 4】

$$q_{sw\_ankle\_roll,d}' = q_{sw\_ankle\_roll,d} - q_{sw\_ankle\_roll}$$

,

herein qsw_ankle_roll,d' is a corrected roll rotation angle of an ankle joint of the swinging leg of the robot, qsw_ankle_roll,d is a roll rotation angle of an ankle joint of the swinging leg of the robot on the target walk trajectory, qsw_ankle_roll is a roll rotation angle of an ankle joint of the swinging leg of the robot that is calculated through sensor data, which is obtained by the IMU sensor, and forward kinematics. Herein a balancing control process, according to an example embodiment of the present invention will be described.

A driving torque of each rotation joint used to control the walk of the robot is calculated by equation 5. The control unit distributes the driving torque to the actuator configured to drive each rotation joint, thereby performing the walking motion of the robot.

【Equation 5】

$$\tau_d = w_1 \tau_{state\_machine} + w_2 \tau_{g\_comp} + w_3 \tau_{model} + w_4 \tau_{reflex}$$

,

herein $\tau_d$ is a driving torque of each rotation joint, w1, w2, w3 and w4 are weighting factors, $\tau_{state\_machine}$ is a torque of each rotation joint used to trace the state machine, $\tau_{g\_comp}$ is a gravity compensation torque, $\tau_{model}$ is a balancing torque, and $\tau_{reflex}$ is a reflex torque.

The torque of each rotation joint used to trace the state machine is calculated by equation 6.

【Equation 6】

$$\tau_{state\_machine} = k_p (q_d - q) - k_d \dot{q}$$

Herein $\tau_{state\_machine}$ is the torque of each rotation joint used to trace the state machine, kp and kd are parameters, qd is a target angle of each rotation joint, q is an angle of each rotation joint, and $\dot{q}$ is a speed of each rotation joint.

The control unit assigns a gravity compensation torque, e.g., $\tau_{g\_comp}$, to the swinging leg, so that a control is achieved through a low position gain and the joint of the robot is naturally moved. The gravity compensation torque is calculated by equation 7.

【Equation 7】

$$\tau_{g\_comp} = G(R_B, q_d)$$

,

herein $\tau_{g\_comp}$ is the gravity compensation torque, RB is a three by three matrix representing an azimuth of the robot base, qd is a target angle of each rotation joint, and the function G() is a gravity compensation function.

The control unit calculates the balancing torque according to the slope of the terrain where the robot is disposed. The balancing torque is calculated by equation 8.

【Equation 8】

$$F_{virtual} = k_p m (p_{B,des} - P_B) - k_d m V_B$$

$$\tau_{model} = J^T F_{virtual}$$

,

herein Fvirtual is a virtual force exerted on the robot, kp and kd are parameters, PB,des is a target position of the robot base, PB is a position of the robot base, m is a mass of the robot, VB is a speed of the robot base, $\tau_{model}$ is the balancing torque, and JT is a Jacobian matrix, which describes an ankle of a supporting leg of the robot to the robot base.

When the leg of the robot is swinging during walking, the robot has a difficulty in responding to the external force that is applied to the robot. Accordingly, in order to compensate for such as a difficulty, the control unit performs a reflex control.

The reflex control is performed to keep the balance of the robot when the posture of the robot is collapsed due to uneven terrain and to prevent the both legs from colliding with each other.

Such a reflex control is calculated by equation 9. That is, a virtual potential barrier is designated, and when the both legs are determined to be close to each other based on the position, the speed and the gradient of the robot base and the position, the angle and the speed of each rotation angle, a reverse torque is applied to the roll rotation joint of the hip joint part, thereby achieving the reflex control.

【Equation 9】

$$\tau_{reflex} = \begin{cases} \eta\left(\dfrac{1}{\rho} - \dfrac{1}{\rho_0}\right)\dfrac{1}{\rho^2}, & if\, \rho \le \rho_0 \\ 0, & if\, \rho > \rho_0 \end{cases}$$

,

herein $\tau$reflex is the reflex torque, $\eta$ is a weighting factor, $\rho$ is a distance between both legs of the robot, and $\rho 0$ is a limit of the distance between the both legs.

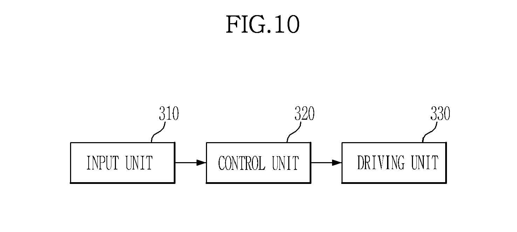

FIG. 10 is a block diagram illustrating the configuration of the robot, according to an example embodiment of the present invention.

Referring to FIG. 10, the robot includes an input unit 310, a control unit 320 and a driving unit 330. The input unit 310 may be configured to receive a target walking motion of the robot as an input. The control unit 320 may be configured to perform an adaptive control by generating a target walking trajectory of the robot according to the inputted target walking motion, to set a state machine representing a walking trajectory of the robot, and to distribute driving torques of the rotation joints, that is, the driving torques tracing the state machine, to driving units of the rotation joints, respectively. The driving unit 330 is configured to drive the respective rotation joints of the robot according to the driving torque distributed by the control unit.

The control unit 320 determines a stride of the robot by using a virtual inverted pendulum model, and determines a position stepped by the foot of the robot by mapping the stride to each rotation joint. In addition, the control unit 320 controls a posture of the torso of the robot by correcting the target walking trajectory by using a difference between an actual gradient of the robot base detected by the IMU sensor and a target gradient of the robot base. The control unit 320 controls a posture of a swinging leg of the robot by keeping a roll rotation angle of an ankle joint of the robot in parallel to a ground.

The control unit 320 calculates a driving torque of each rotation joint according to the target walking trajectory of the robot. The control unit 320 calculates, the torque of each rotation joint used to trace the state machine, the gravity compensation torque, and the reflex torque.

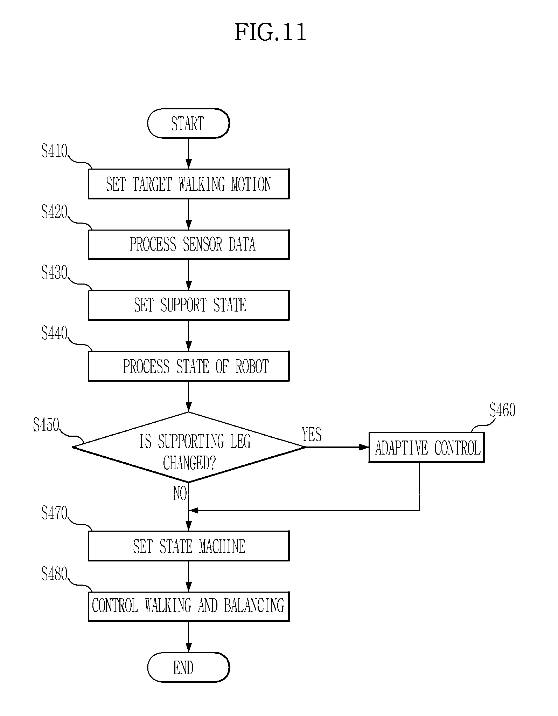

FIG. 11 is a flowchart showing a method of controlling a robot, according to an example embodiment of the present invention.

Referring to FIG. 11, a target walking motion of the robot is set (S410). The target walking motion of the robot includes an x-axis displacement, a y-axis displacement, and a z-axis rotation of the robot base.

Sensor data of a plurality of sensors installed on the robot processes are processed (S420). An IMU sensor, e.g., IMU 14 of FIG. 2, is installed on a torso of the robot. A F/T sensor, e.g., F/T sensor 24 of FIG. 2, is installed between the foot and the ankle joint part. An encoder sensor (not shown) is installed on each rotation joint of the robot.

The IMU sensor detects the position, the speed, and the gradient of the robot. The F/T sensor detects the external force in a z-axis direction exerted on the foot of the robot. The encoder sensor detects the position, the angle, and the speed of each rotation joint. The gradient of the robot base detected by the IMU sensor and the external force in a z-axis direction exerted on the foot of the robot, detected by the F/T sensor, are subject to a smoothing filtering or a low pass filtering. In addition, the position, the angle, and the velocity of each rotation joint detected by the encoder sensor is subject to a low pass filtering.

A support state of the robot and a coordination system are set (S430). The F/T sensor, which detects the external force in a z-axis direction exerted on the foot of the robot, measures the load exerted on the foot of the robot. Accordingly, if the load measured by the F/T sensor exceeds a predetermined threshold value, the foot is determined as a supporting foot, and subsequently a change in the supporting leg is determined.

The support state is divided into a left side supporting state, a right side supporting state, and a both side supporting states. By regarding the position of the supporting foot as a zero point according to the support state of the robot, each coordination system is set.

The state of the robot is processed based on the sensor data (S440). The state of the robot is a concept involving the position, the speed, and the gradient of the robot base, and the position, the angle, and the speed of each rotation joint.

It is determined whether the supporting leg is changed (S450). The F/T sensor detects the external force in a z-axis direction exerted on the foot of the robot. Accordingly, the F/T sensor measures the load exerted on the foot. Based on the load measured by the F/T sensor, the change of the supporting leg is determined. For example, if the load measured at the left leg exceeds a predetermined threshold value, the left leg is controlled to swing and the right leg is controlled to support the ground. On the contrary, if the load measured at the right leg exceeds a predetermined threshold value, the right leg is controlled to swing and the left leg is controlled to support the ground. In this manner, the robot walks while alternating the swinging leg and the swinging leg between the left and right legs.

Meanwhile, if the supporting leg of the robot is changed, the coordinate system is also changed. That is, the coordinate system is set with respect to the position of a supporting leg that is changed as a zero point.

If the supporting leg of the robot is changed, the target walking trajectory of the robot is generated according to the target walking motion, thereby performing an adaptive control (S460). The position, the speed and the gradient of the robot base and the position, the angle and the speed of each rotation joint are calculated at the moment the supporting leg of the robot is changed, and the target walking motion is generated by use of a virtual inverted pendulum model.

In addition, the adaptive control process of the robot includes a process of controlling a torso of the robot and a control process of keeping a roll rotation angle of the ankle joint in parallel to the ground. The process of controlling a torso of the robot is achieved by correcting the target walking trajectory by a difference between an actual gradient of the robot base detected by the IMU sensor and a target gradient of the robot base. The control process of keeping a roll rotation of the ankle joint in parallel to the ground is achieved such that the robot will not tilt when stepping with the swinging leg. A state machine representing a walking trajectory of the robot is set before the robot starts walking (S470). The state machine is composed of a through point of each rotation joint. The target walk trajectory of the robot is changed by changing the via point.

The walking and the balancing of the robot are controlled by tracing the state machine (S480).

The driving torque of each rotation joint used to control the walking of the robot is provided in the form of a combination of a torque of each rotation joint used to trace the state machine, a gravity compensation torque, a balancing torque, and a reflex torque.

The gravity compensation torque is configured to apply a gravity compensation torque to a swinging leg, so that a control is achieved using a low-position control gain. The balancing torque is configured to keep a stable posture of the robot according to a slope of the terrain where the robot exists.

Meanwhile, the reflex torque is configured to correspond to a collapse of the posture of the robot due to an uneven terrain. According to the reflex torque, when the both legs are determined to be too close to each other, such that both legs may collide, based on the position, the speed, and the gradient of the robot base, and the position, the angle, and the speed of each rotation joint, a reverse torque is distributed to the roll rotation joint of the hip joint part.

Although a few embodiments of the present invention have been shown and described, it would be appreciated by those skilled in the art that changes may be made in these embodiments without departing from the principles of the disclosure, the scope of which is defined in the claims and their equivalents.

**Claims**

1. A method of controlling a robot, the method comprising:

    setting a target walking motion of the robot using an X-axis displacement, a y-axis displacement, and a z-axis rotation of a robot base of the robot;
    detecting and processing data of a position, a speed, and a gradient of the robot base, a z-axis external force exerted on a foot, and a position, an angle, and a speed of rotation joints of the robot, using sensors;
    setting a support state and a coordination system of the robot based on the processed data;
    processing a state of the robot based on the processed data;
    performing an adaptive control by generating a target walking trajectory of the robot according to the set target walking motion when a supporting leg of the robot is changed;
    setting a state machine representing a walking trajectory of the robot; and
    controlling a walking and a balancing of the robot by tracing the state machine that is set.

2. The method according to claim 1, wherein in the detecting and processing of the data, the sensors are installed at a torso, the foot, and the rotation joints of the robot, such that an inertial measurement unit (IMU) sensor installed on the torso of the robot detects the position, the speed, and the gradient of the robot base, a force/torque (F/T) sensor installed on the foot of the robot detects the z-axis external force exerted on the foot, and an encoder sensor installed on each rotation joint of the robot detects the position, the angle, and the speed of the each rotation joint; optionally wherein in the detecting and processing of the data, data detected by the IMU sensor and the F/T sensor is subject to a smoothing filter or a Low Pass Filter, and data detected by the encoder sensor is subject to a Low Pass Filter.

3. The method according to claim 1 or 2, wherein in the setting of the support state and the coordination system of the robot, the foot of the robot is determined as a supporting foot of the robot when the z-axis external force exerted on the foot of the robot exceeds a predetermined threshold value.

4. The method according to claim 3, wherein in the setting of the support state and the coordination system of the robot, a position of the supporting foot of the robot in the coordination system is set as a zero point.

5. The method according to claim 3 or 4, wherein in the setting of the support state and the coordination system of the robot, the support state of the robot is divided into a plurality of supporting states, including left side supporting state, a right side supporting state, and a both side supporting state.

6. The method according to any one of claims 1 to 5, wherein in the processing of the state of the robot, the state of the robot comprises the position, the speed and the gradient of the robot base, and the position, the angle, and the speed of each rotation joint; optionally wherein in the processing of the state of the robot, the position and the speed of the robot base are compensated and calculated according to equation 1 by use of the coordination system, wherein equation 1 is as follows:

【Equation 1】

$$pB_x' = pB_x - l_{leg} \times \sin(B_{roll\_FK} - B_{roll\_IMU})$$

$$pB_y' = pB_y + l_{leg} \times \sin(B_{pitch\_FK} - B_{pitch\_IMU}) \quad ,$$

herein $pB_x'$ and $pB_y'$, respectively, represent an x-axis position of the robot base and a y-axis position of the robot base that are compensated, $pB_x$ and $pB_y$, respectively, represent an x-axis position of the robot base and a y axis position of the robot base that are calculated using the coordination system, lleg represents a length of a leg of the robot, Broll_FK and Bpitch_FK, respectively, represent a roll gradient of the robot and a pitch gradient of the robot that are calculated through forward kinematics using the coordination system, and Broll_IMU, Bpitch_IMU, respectively, represent a roll gradient of the robot and a pitch gradient of the robot that are detected by the sensor installed on the torso of the robot.

7. The method of claim 6, wherein in the processing of the state of the robot, the position, the angle, and the speed of each rotation joint are compensated and calculated through forward kinematics and dynamics using of the coordination system based on the processed data.

8. The method according to any one of claims 1 to 7, wherein in the performing of the adaptive control, the target walking trajectory is generated using the position, the speed, and the gradient of the robot base, and the position, the angle, and the speed of each rotation joint; optionally wherein in the performing of adaptive control, a stride of the robot is determined according to equation 2 by use of a virtual inverted pendulum model, and a position stepped by the foot of the robot is determined by mapping the stride to each rotation joint, wherein equation 2 is as follows:

【Equation 2】

$$l_{step} = V_B \sqrt{h_0 / g + V_B^2 / (4g^2)}$$

$$p_{sweep} = \arcsin(l_{step} / l_{leg})$$

$$\lambda = x_{des} / x_{des,max}$$

$$p_{torso} = \lambda^2 c_{torso,max}$$

$$p_{sweep,max} = \sqrt{\lambda} c_{sweep,max} + c_{sweep,min}$$

$$p_{knee} = \lambda c_{knee,max} + (1-\lambda) c_{knee,min}$$

$$p_{roll} = \lambda c_{roll,max} + (1-\lambda) c_{roll,min}$$

$$p_{toeoff} = \lambda c_{toeoff,max} + (1-\lambda) c_{toeoff,min}$$

herein, lstep represents the stride, VB represents the speed of the robot base, ho represents an initial height of the robot base, g is an acceleration gravity, psweep is a control variable of controlling a motion of each rotation joint, lleg is a length of a leg of the robot, xdes is an x-axis displacement of the robot base, xdes,max is a maximum of the x-axis displacement of the robot base, ptorso is a control variable of controlling a rotation angle of a virtual torso, ctorso,max is a predetermined maximum of the rotation angle of the virtual torso, psweep,max is a maximum of a control variable of controlling a motion of each rotation joint, csweep,max is a predetermined maximum of the motion of each rotation joint, csweep,min is a predetermined minimum of the motion of each rotation joint, pknee is a control variable of controlling a rotation angle of a knee joint of the robot, cknee,max is a predetermined maximum of the rotation angle of the knee joint of the robot, cknee,min is a predetermined minimum of the rotation angle of the knee joint of the robot, proll is a control variable of controlling a roll rotation angle of each rotation joint, croll,max is a predetermined maximum of the roll rotation angle of each rotation joint, croll,min is a predetermined minimum of the roll rotation angle of each rotation joint, ptoeoff is a control variable of controlling the position stepped by the foot of the robot, ctoeoff,max is a predetermined maximum of the position stepped by the foot, and ctoeoff,min is a predetermined minimum of the position stepped by the foot.

9. The method of claim 8, wherein in the performing of the adaptive control, according to equation 3, a posture of the torso is controlled by correcting the target walking trajectory using a difference between an actual gradient of the robot base detected by the sensor installed on the torso of the robot and a target gradient of the robot base, wherein equation 3 is as follows:

【Equation 3】

$$q_{hip\_roll,d}' = q_{hip\_roll,d} - (B_{roll,d} - B_{roll\_IMU})$$

$$q_{hip\_pitch,d}' = q_{hip\_pitch,d} - (B_{pitch,d} - B_{pitch\_IMU})$$

,

herein qhip_roll,d' and qhip_pitch,d', respectively, represent a roll rotation angle of a hip joint and a pitch rotation angle of the hip joint that are corrected, qhip_roll,d and qhip_pitch,d, respectively, represent a roll rotation angle of the hip joint and a pitch rotation angle of the hip joint that are on the target walking trajectory, Broll,d and Bpitch,d, respectively, represent a target roll gradient of the robot base and a target pitch gradient of the robot base, and Broll_IMU and Bpitch_IMU, respectively, represent a roll gradient of the robot base and a pitch gradient of the robot base that are detected by the sensor.

10. The method of claim 8 or 9, wherein in the performing of the adaptive control, a posture of a swinging leg of the robot is controlled to keep a roll rotation angle of an ankle joint of the robot in parallel to a ground according to equation 4 as follows:

【Equation 4】

$$q_{sw\_ankle\_roll,d}' = q_{sw\_ankle\_roll,d} - q_{sw\_ankle\_roll}$$ ,

herein qsw_ankle_roll,d' is a corrected roll rotation angle of an ankle joint of the swinging leg of the robot, qsw_ankle_roll,d is a roll rotation angle of an ankle joint of the swinging leg of the robot on the target walking trajectory, qsw_ankle_roll is a roll rotation angle of an ankle joint of the swinging leg of the robot that is calculated through the processed data and forward kinematics.

11. The method according to any preceding claim when dependent on claim 2, wherein the supporting leg is changed, based on a load measured by the F/T sensor.

12. The method according to any preceding claim, further comprising:

distributing driving torques of the rotation joints of the robot, used to trace the state machine, to actuators of the rotation joints, respectively;
optionally wherein in the distributing of the driving torques of the rotation joints to the actuators of the rotation joints, a driving torque of each rotation joint is calculated according to equation 5 as follows:

【Equation 5】

$$\tau_d = w_1 \tau_{state\_machine} + w_2 \tau_{g\_comp} + w_3 \tau_{model} + w_4 \tau_{reflex}$$ ,

herein $\tau_d$ is a driving torque of each rotation joint, w1, w2, w3 and w4 are weighting factors, $\tau_{state\_machine}$ is a torque of each rotation joint, used to trace the state machine, $\tau_{g\_comp}$ is a gravity compensation torque, $\tau_{model}$ is a balancing torque, and $\tau_{reflex}$ is a reflex torque.

13. The method of claim 12, wherein in the distributing of the driving torques of the rotation joints to the actuators of the rotation joints, the torque of each rotation joint used to trace the state machine is calculated according to equation 6 as follows:

【Equation 6】

$$\tau_{state\_machine} = k_p(q_d - q) - k_d\dot{q}$$ ,

herein $\tau$state_machine is the torque of each rotation joint, used to trace the state machine, kp and kd are parameters, qd is a target angle of each rotation joint, q is an angle of each rotation joint, and $\dot{q}$ is a speed of each rotation joint.

14. The method of claim 12 or 13, wherein in the distributing of the driving torques of the rotation joints to the actuators of the rotation joints, the gravity compensation torque is calculated according to equation 7 as follows:

【Equation 7】

$$\tau_{g\_comp} = G(R_B, q_d)$$ ,

herein $\tau$g_comp is the gravity compensation torque, RB is a three by three matrix representing an azimuth of the robot base, qd is a target angle of each rotation joint, and G() is a gravity compensation function.

15. The method according to any one of claims 12 to 14, wherein in the distributing of the driving torques of the rotation joints to the actuators of the rotation joints, the balancing torque is calculated according to equation 8 as follows:

【Equation 8】

$$F_{virtual} = k_p m(p_{B,des} - P_B) - k_d m V_B$$

$$\tau_{model} = J^T F_{virtual}$$ ,

herein Fvirtual is a virtual force exerted on the robot, kp and kd are parameters, PB,des is a target position of the robot base, PB is a position of the robot base, m is a mass of the robot, VB is a speed of the robot base, $\tau$model is the balancing torque, and JT is a Jacobian matrix.

16. The method according to any one of claims 12 to 15, wherein in the distributing of the driving torques of the rotation joints to the actuators of the rotation joints, the reflex torque is calculated according to equation 9 as follows:

【Equation 9】

$$\tau_{reflex} = \begin{cases} \eta\left(\dfrac{1}{\rho} - \dfrac{1}{\rho_0}\right)\dfrac{1}{\rho^2}, & if\,\rho \leq \rho_0 \\ 0, & if\,\rho > \rho_0 \end{cases}$$ ,

herein $\tau$reflex is the reflex torque, $\eta$ is a weighting factor, $\rho$ is a distance between both legs of the robot, and $\rho_0$ is

a limit of the distance between the both legs.

17. A robot having a robot base and a plurality of rotation joints for walking, the robot comprising:

an input unit arranged to obtain a target walking motion of the robot as an input;
a control unit configured to perform an adaptive control by generating a target walking trajectory of the robot according to the inputted target walking motion, to set a state machine representing a walking trajectory of the robot, and to distribute driving torques of the rotation joints, used to trace the state machine, to driving units of the rotation joints, respectively; and
a driving unit configured to drive the respective rotation joints of the robot according to the distributed driving torque.

18. The robot of claim 17, wherein the control unit is arranged to determine a stride of the robot according to equation 2 by use of a virtual inverted pendulum model, and determines a position stepped by the foot of the robot by mapping the stride to each rotation joint of the robot, wherein equation 2 is as follows:

【Equation 2】

$$l_{step} = V_B \sqrt{h_0 / g + V_B^2 / (4g^2)}$$

$$p_{sweep} = \arcsin(l_{step} / l_{leg})$$

$$\lambda = x_{des} / x_{des,max}$$

$$p_{torso} = \lambda^2 c_{torso,max}$$

$$p_{sweep,max} = \sqrt{\lambda} c_{sweep,max} + c_{sweep,min}$$

$$p_{knee} = \lambda c_{knee,max} + (1-\lambda) c_{knee,min}$$

$$p_{roll} = \lambda c_{roll,max} + (1-\lambda) c_{roll,min}$$

$$p_{toeoff} = \lambda c_{toeoff,max} + (1-\lambda) c_{toeoff,min}$$

herein, lstep represents the stride, VB represents the speed of the robot base, ho represents an initial height of the robot base, g is an acceleration gravity, psweep is a control variable of controlling a motion of each rotation joint, lleg is a length of a leg of the robot, xdes is an x-axis displacement of the robot base, xdes,max is a maximum of the x-axis displacement of the robot base, ptorso is a control variable of controlling a rotation angle of a virtual torso, ctorso,max is a predetermined maximum of the rotation angle of the virtual torso, psweep,max is a maximum of a control variable of controlling a motion of each rotation joint, csweep,max is a predetermined maximum of the motion of each rotation joint, csweep,min is a predetermined minimum of the motion of each rotation joint, pknee is a control variable of controlling a rotation angle of a knee joint of the robot, cknee,max is a predetermined maximum of the rotation angle of the knee joint of the robot, cknee,min is a predetermined minimum of the rotation angle of the knee joint of the robot, proll is a control variable of controlling a roll rotation angle of each rotation joint, croll,max is a predetermined maximum of the roll rotation angle of each rotation joint, croll,min is a predetermined minimum of the roll rotation angle of each rotation joint, ptoeoff is a control variable of controlling the position stepped by the foot of the robot, ctoeoff,max is a predetermined maximum of the position stepped by the foot, and ctoeoff,min is a predetermined minimum of the position stepped by the foot.

19. The robot of claim 17 or 18, wherein the control unit controls a posture of the torso by correcting the target walking trajectory using a difference between an actual gradient of the robot base detected by the sensor installed on the torso of the robot and a target gradient of the robot base according to equation 3 as follows:

【Equation 3】

$$q_{hip\_roll,d}{}' = q_{hip\_roll,d} - \left(B_{roll,d} - B_{roll\_IMU}\right)$$

$$q_{hip\_pitch,d}{}' = q_{hip\_pitch,d} - \left(B_{pitch,d} - B_{pitch\_IMU}\right)$$

herein $q_{hip\_roll,d}'$ and $q_{hip\_pitch,d}'$, respectively, represent a roll rotation angle of a hip joint and a pitch rotation angle of the hip joint that are corrected, $q_{hip\_roll,d}$ and $q_{hip\_pitch,d}$ respectively represent a roll rotation angle of the hip joint and a pitch rotation angle of the hip joint that are on the target walking trajectory, $B_{roll,d}$ and $B_{pitch,d}$ respectively represent a target roll gradient of the robot base and a target pitch gradient of the robot base, and $B_{roll\_IMU}$ and $B_{pitch\_IMU}$ respectively represent a roll gradient of the robot base and a pitch gradient of the robot base that are detected by the sensor.

20. The robot according to any one of claims 17 to 19, wherein the control unit is arranged to control a posture of a swinging leg of the robot by keeping a roll rotation angle of an ankle joint of the robot in parallel to a ground according to equation 4 as follows:

【Equation 4】

$$q_{sw\_ankle\_roll,d}{}' = q_{sw\_ankle\_roll,d} - q_{sw\_ankle\_roll}$$

herein $q_{sw\_ankle\_roll,d}'$ is a corrected roll rotation angle of an ankle joint of the swinging leg of the robot, $q_{sw\_ankle\_roll,d}$ is a roll rotation angle of an ankle joint of the swinging leg of the robot on the target walking trajectory, $q_{sw\_ankle\_roll}$ is a roll rotation angle of an ankle joint of the swinging leg of the robot that is calculated through the processed data and forward kinematics.

21. The robot according to any one of claims 17 to 20, wherein the control unit is arranged to calculate a driving torque of each rotation joint according to equation 5 as follows:

【Equation 5】

$$\tau_d = w_1 \tau_{state\_machine} + w_2 \tau_{g\_comp} + w_3 \tau_{model} + w_4 \tau_{reflex}$$

herein $\tau_d$ is a driving torque of each rotation joint, $w_1$, $w_2$, $w_3$ and $w_4$ are weighting factors, $\tau_{state\_machine}$ is a torque of each rotation joint, used to trace the state machine, $\tau_{g\_comp}$ is a gravity compensation torque, $\tau_{model}$ is a balancing torque, and $\tau_{reflex}$ is a reflex torque.

22. The robot according to claim 21, wherein the control unit is arranged to calculate the torque of each rotation joint used to trace the state machine according to equation 6 as follows:

【Equation 6】

$$\tau_{state\_machine} = k_p(q_d - q) - k_d \dot{q}$$,

herein τstate_machine is the torque of each rotation joint, used to trace the state machine, kp and kd are parameters, qd is a target angle of each rotation joint, q is an angle of each rotation joint, and $\dot{q}$ is a speed of each rotation joint.

23. The robot according to claim 21 or 22, wherein the control unit is arranged to calculate the gravity compensation torque according to equation 7 as follows:

【Equation 7】

$$\tau_{g\_comp} = G(R_B, q_d)$$,

herein τg_comp is the gravity compensation torque, RB is a three by three matrix representing an azimuth of the robot base, qd is a target angle of each rotation joint, and G() is a gravity compensation function.

24. The robot according to any one of claims 21 to 23, wherein the control unit is arranged to calculate the balancing torque according to equation 8 as follows:

【Equation 8】

$$F_{virtual} = k_p m (p_{B,des} - P_B) - k_d m V_B$$

$$\tau_{model} = J^T F_{virtual}$$

herein Fvirtual is a virtual force exerted on the robot, kp and kd are parameters, PB,des is a target position of the robot base, PB is a position of the robot base, m is a mass of the robot, VB is a speed of the robot base, τmodel is the balancing torque, and JT is a Jacobian matrix.

25. The robot according to any one of claims 21 to 24, wherein the control unit is arranged to calculate the reflex torque according to equation 9 as follows:

【Equation 9】

$$\tau_{reflex} = \begin{cases} \eta(\dfrac{1}{\rho} - \dfrac{1}{\rho_0})\dfrac{1}{\rho^2}, & if \rho \le \rho_0 \\ 0, & if \rho > \rho_0 \end{cases}$$

, herein τreflex is the reflex torque, η is a weighting factor, ρ is a distance between both legs of the robot, and ρ0 is a limit of the distance between the both legs.

FIG. 1

## FIG.2

FIG.3

# FIG.4

θ8
Virtual
Torso roll

z

y

y

Swing
Hip roll

Stance
Hip roll

θ9

θ11

Stance
Ankle roll

Swing
Ankle roll

θ10

θ12

# FIG.5

FIG.6

112L    112R

EP 2 574 527 A2

# FIG.7

32

FIG.8

Right support
Phase triggered

Left support
Phase triggered

Steady

Post

Pre

Ready, Stop

FIG.9

ready state | pre-steady state | steady state | post-steady state | stop state

FIG.10

```
     310                 320                 330
  ┌──────────┐       ┌──────────────┐    ┌──────────────┐
  │INPUT UNIT│──────▶│ CONTROL UNIT │───▶│ DRIVING UNIT │
  └──────────┘       └──────────────┘    └──────────────┘
```

# FIG.11

START

S410 — SET TARGET WALKING MOTION

S420 — PROCESS SENSOR DATA

S430 — SET SUPPORT STATE

S440 — PROCESS STATE OF ROBOT

S450 — IS SUPPORTING LEG CHANGED?

YES → S460 ADAPTIVE CONTROL

NO

S470 — SET STATE MACHINE

S480 — CONTROL WALKING AND BALANCING

END